# EUROPEAN PATENT SPECIFICATION

(11) **EP 2 960 040 B1**
(45) Date of publication and mention of the grant of the patent: **15.03.2017**
(21) Application number: 15173262.5
(22) Date of filing: 23.06.2015
(51) Int. Cl.: B29C 45/50, B29C 45/17

(54) **INJECTION MOLDING MACHINE**
SPRITZGIESSMASCHINE
MACHINE DE MOULAGE A INJECTION

(30) Priority: 25.06.2014 JP 2014130717
(43) Date of publication of application: 30.12.2015
(73) Proprietor: SUMITOMO HEAVY INDUSTRIES, LTD., Tokyo 141-6025 (JP)
(72) Inventor: MATSUTAKE, Yoshitaka, Chiba, 263-0001 (JP)
(74) Representative: Louis Pöhlau Lohrentz

(56) References cited:
- JP-A- H06 106 586
- JP-A- 2000 167 875
- JP-A- 2001 191 376
- JP-A- 2002 200 658
- US-A- 5 804 224
- US-A1- 2003 219 509
- US-A1- 2005 008 731

## Description

### BACKGROUND OF THE INVENTION

### Field of the Invention

The present invention relates to an injection molding machine.

### Description of Related Art

An injection molding machine has a mold clamping unit which performs mold closing, mold clamping, and mold opening of a mold unit, an injection unit which fills the mold unit with a molding material, an ejector unit which pushes a molding product out from the mold unit, and the like. The mold clamping unit, the injection unit, or the ejector unit has a motor as a drive source (refer to, for example, pamphlet of International Publication No. WO2005/068155).

United States Patent Application US 2005/008731 A1 discloses an injection molding machine having two injection units with heating cylinders having their base portions retained on a movable retention member. Moreover, ball screw shaft portions are provided outside the heating cylinders on nozzle touch rods that have their one ends fixed to a stationary die. Nut pieces are retained rotatably by the retention member, screwed down to the ball screw shaft portions, and driven via pulleys by servo motors that are mounted on the retention member for moving said member together with the heating cylinders.

United States Patent Application US 2003/219509 A1 discloses a molding machine in which an injection screw is inserted in a heating cylinder and attached to a moving plate so as to be movable with said plate. The moving plate is provided with a servomotor for rotating via a pulley a ball screw that is attached to the moving plate, thus driving the moving plate and advancing the screw, thereby executing injection.

Similar mechanisms in which a member of an injection unit is rotated via a motor that is disposed off the rotation axis of said member are disclosed in Japanese Patent Documents JP 2000 167875 A and JP 2002 200658 A.

There is a request to shorten the overall length of the injection molding machine.

### SUMMARY OF THE INVENTION

The present invention has been made in view of the above-described problem and has a main object to provide an injection molding machine in which the overall length can be shortened.

According to an embodiment of the invention, there is provided an injection molding machine according to the features of claim 1, including: a movable member; a motor which moves the movable member; and a motion conversion mechanism which converts rotation motion of the motor into linear motion of the movable member the motor is mounted on the movable member and moves along with the movable member. The motion conversion mechanism includes a female screw member and a male screw member corresponding to the female screw member, and at least a part of the female screw member is disposed at a position overlapping the motor in an axial direction.

According to the aspect of the present invention, an injection molding machine in which the overall length can be shortened is provided.

### BRIEF DESCRIPTION OF THE DRAWINGS

Fig. 1 is a diagram showing an injection molding machine according to an embodiment of the present invention.
Fig. 2 is a diagram showing a main section of an injection unit according to the embodiment of the present invention.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

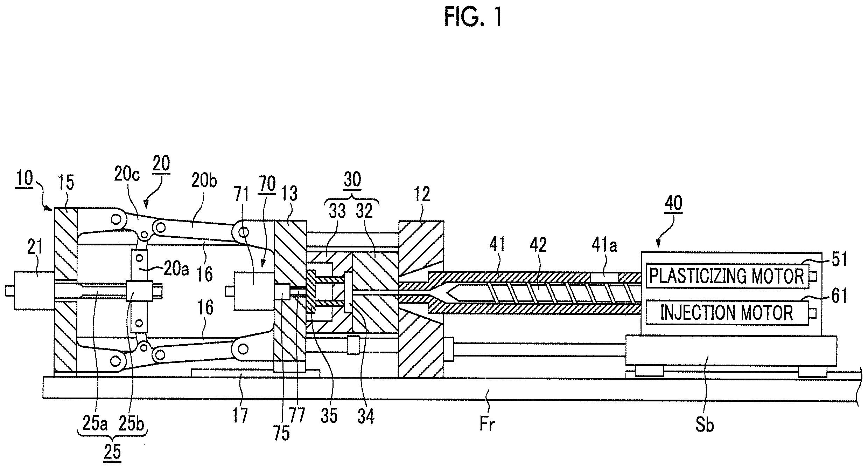

Fig. 1 is a diagram showing an injection molding machine according to an embodiment of the present invention. The injection molding machine shown in Fig. 1 has a frame Fr, a mold clamping unit 10, an injection unit 40, and an ejector unit 70.

First, the mold clamping unit 10 will be described with reference to Fig. 1 and the like. The mold clamping unit 10 performs mold closing, mold clamping, and mold opening of a mold unit 30. The mold clamping unit 10 has a stationary platen 12, a movable platen 13, a rear platen 15, a tie bar 16, a toggle mechanism 20, a mold clamping motor 21, and a motion conversion mechanism 25. In the description of the mold clamping unit 10, a description will be made regarding a direction of movement (a rightward direction in Fig. 1) of the movable platen 13 when performing mold closing as the front and a direction of movement (a leftward direction in Fig. 1) of the movable platen 13 when performing mold opening as the rear.

The stationary platen 12 is fixed to the frame Fr. A stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retreat with respect to the stationary platen 12. A movable mold 33 is mounted on the surface facing the stationary platen 12 in the movable platen 13.

The movable platen 13 advances and retreats with respect to the stationary platen 12, whereby the mold closing, the mold clamping, and the mold opening are performed. The mold unit 30 is configured with the stationary mold 32 and the movable mold 33.

The rear platen 15 is connected to the stationary platen 12 through a plurality of (for example, four) tie bars 16 and is placed on the frame Fr so as to be able to move in a mold opening and closing direction. In addition, the rear platen 15 may be made so as to be able to move along a guide which is laid on the frame Fr. The guide of the rear platen 15 may be shared by the guide 17 of the movable platen 13.

In addition, in this embodiment, a configuration is made such that the stationary platen 12 is fixed to the frame Fr and the rear platen 15 is movable in the mold opening and closing direction with respect to the frame Fr. However, a configuration may be made such that the rear platen 15 is fixed to the frame Fr and the stationary platen 12 and is movable in the mold opening and closing direction with respect to the frame Fr.

The tie bars 16 are made so as to be parallel to each other in the mold opening and closing direction and extend according to a mold clamping force. A mold clamping force detector is provided in at least one of the tie bars 16. The mold clamping force detector may be a strain gauge type and detects the strain of the tie bar, thereby detecting the mold clamping force.

In addition, the mold clamping force detector is not limited to the strain gauge type and may be a piezoelectric type, a capacitive type, a hydraulic type, an electromagnetic type, or the like, and a mounting position thereof is also not limited to the tie bar 16.

The toggle mechanism 20 is disposed between the movable platen 13 and the rear platen 15. The toggle mechanism 20 is configured with a cross head 20a, a plurality of links 20b and 20c, and the like. The link20bonone side is oscillatablymounted on the movable platen 13, and the link 20c on the other side is oscillatably mounted on the rear platen 15. The links 20b and 20c are oscillatably connected to each other by a pin or the like. The plurality of links 20b and 20c are bent and stretched by advancing and retreating the cross head 20a, whereby the movable platen 13 advances and retreats with respect to the rear platen 15.

The mold clamping motor 21 is mounted on the rear platen 15 and advances and retreats the cross head 20a, thereby advancing and retreating the movable platen 13. The motion conversion mechanism 25 for converting the rotation motion of the mold clamping motor 21 into linear motion and transmitting the linear motion to the cross head 20a is provided between the mold clamping motor 21 and the cross head 20a.

The motion conversion mechanism 25 includes a ball screw shaft 25a and a ball screw nut 25b. The ball screw shaft 25a is a male screwmember having a thread groove at the outer periphery thereof. On the other hand, the ball screw nut 25b is a female screwmember having a thread groove at the inner periphery thereof.

The ball screw shaft 25a is fixed to an output shaft of the mold clamping motor 21, thereby rotating along with the output shaft. On the other hand, the ball screw nut 25b is fixed to the cross head 20a. If the mold clamping motor 21 is driven, thereby rotating the ball screw shaft 25a, the ball screw nut 25b and the cross head 20a advance and retreat.

In addition, in this embodiment, the ball screw shaft 25a rotates and the ball screw nut 25b moves linearly. However, the motion of the ball screw shaft 25a and the ball screw nut 25b may be varied. For example, a configuration may be made in which the ball screw nut 25b rotates and the ball screw shaft 25a moves linearly. A configuration may be made in which one of the ball screw shaft 25a and the ball screw nut 25b is fixed and the other rotates and moves linearly. In this case, a bearing which rotatably supports the other is used and a member (for example, the cross head 20a) which retains the bearing moves linearly. Instead of a ball screw, a roller screw may be used. The roller screw may be either a planetary roller screw or a circulation roller screw.

In Fig. 1, the center line of the motion conversion mechanism 25 and the center line of the mold clamping motor 21 are disposed on the same straight line. However, the center lines may not be disposed on the same straight line. In this case, the rotation motion of the mold clamping motor 21 is transmitted to the motion conversion mechanism 25 through a belt, a pulley, or the like.

The mold clamping motor 21 is driven, thereby advancing the cross head 20a, whereby the movable platen 13 advances, and thus the mold closing is performed. After the completion of the mold closing, a mold clamping force which is obtained by multiplying a thrust force of the mold clamping motor 21 by a toggle magnification is generated, and the mold clamping is performed using the mold clamping force. At the time of the mold clamping, a cavity 34 is formed between the movable mold 33 and the stationary mold 32, and the cavity 34 is filled with a liquid molding material. The molding material in the cavity 34 is solidified, thereby becoming a molding product. Thereafter, the mold clamping motor 21 is driven, thereby retreating the cross head 20a, whereby the movable platen 13 retreats, and thus the mold opening is performed.

Next, the ejector unit 70 will be described with reference to Fig. 1 and the like. The ejector unit 70 pushes the molding product out from the mold unit 30 after the molding opening. The ejector unit 70 has an ejector motor 71 and an ejector rod 77. In the description of the ejector unit 70, similarly to the description of the mold clamping unit 10, a description will be made regarding a direction of movement (the rightward direction in Fig. 1) of the movable platen 13 when performing the mold closing as the front and a direction of movement (the leftward direction in Fig. 1) of the movable platen 13 when performing the mold opening as the rear.

The ejector rod 77 is inserted into a through-hole of the movable platen 13 and made so as to be able to advance and retreat with respect to the movable platen 13. An ejection member 35 which is disposed in the movable mold 33 advances and retreats according to the advance and retreat of the ejector rod 77, and thus the ejection member 35 pushes the molding product out from the movable mold 33.

The ejector motor 71 advances and retreats the ejector rod 77. A motion conversion mechanism 75 for converting the rotation motion of the ejector motor 71 into the linear motion of the ejector rod 77 is provided between the ejector motor 71 and the ejector rod 77.

The motion conversion mechanism 75 is configured in the same manner as the motion conversion mechanism 25 and includes, for example, a ball screw, a roller screw, or the like. The roller screw may be either a planetary roller screw or a circulation roller screw.

Next, the injection unit 40 will be described with reference to Fig. 1 and the like. The injection unit 40 is installed on a slide base Sb capable of advancing and retreating with respect to the frame Fr, and is made so as to be able to advance and retreat with respect to the mold unit 30. The injection unit 40 comes into contact with the mold unit 30 and fills the mold unit 30 with a molding material.

The injection unit 40 has a cylinder 41, a screw 42, a plasticizing motor 51, and an injection motor 61. In the description of the injection unit 40, unlike in the description of the mold clamping unit 10, a description will be made regarding a direction of movement (the leftward direction in Fig. 1) of the screw 42 when performing filling as the front and a direction of movement (the rightward direction in Fig. 1) of the screw 42 when performing plasticizing as the rear.

The cylinder 41 is a plasticizing cylinder which heats a molding material fed from a feed port 41a. The feed port 41a is formed in a rear portion of the cylinder 41. A heat source such as a heater is provided in the outer periphery of the cylinder 41.

The screw 42 is a delivery member which sends out the molding material in the cylinder 41. The screw 42 is disposed so as to be able to rotate and be able to advance and retreat in the cylinder 41.

The plasticizing motor 51 rotates the screw 42, thereby sending the molding material forward along a helical groove of the screw 42. The molding material is gradually melted by heat from the cylinder 41 while being sent forward. The screw 42 retreats as a liquid molding material is sent to the front of the screw 42 and accumulated in a front portion of the cylinder 41.

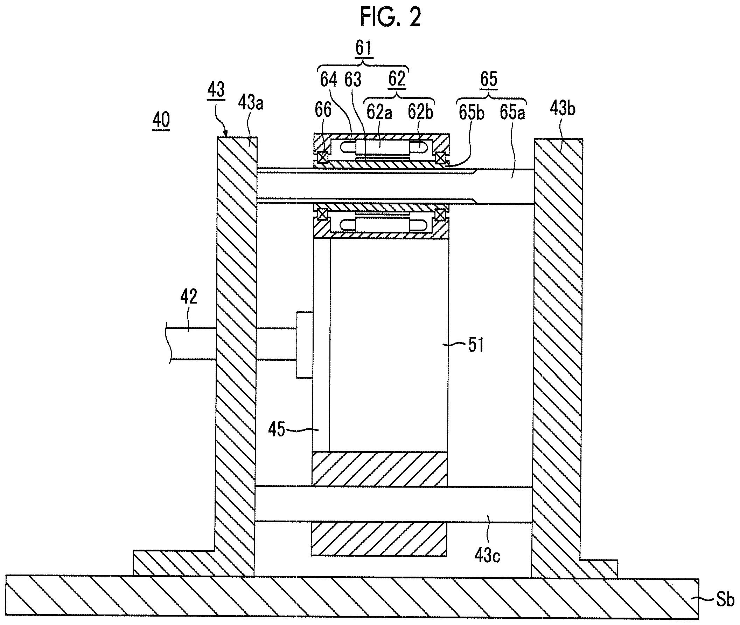

The injection motor 61 advances the screw 42 , thereby making the cavity 34 of the mold unit 30 be filled with the liquid molding material accumulated in front of the screw 42. Thereafter, the injection motor 61 presses the screw 42 forward, thereby applying pressure to the molding material in the cavity 34. A molding material for responding to a shortage due to shrinkage can be replenished. A motion conversion mechanism 65 (refer to Fig. 2) for converting the rotation motion of the injection motor 61 into the linear motion of the screw 42 is provided between the injection motor 61 and the screw 42.

Fig. 2 is a diagram showing a main section of the injection unit according to the embodiment of the present invention. The injection unit 40 shown in Fig. 2 has an injection frame 43, a movable plate 45, the plasticizing motor 51, the injection motor 61, the motion conversion mechanism 65, a bearing 66, and the like. In this embodiment, the movable plate 45 corresponds to a movable member. However, the shape of the movable member is not particularly limited. For example, the shape of the movable member may be a box shape.

The injection frame 43 is fixed to the slide base Sb. The injection frame 43 is configured with a front support 43a, a rear support 43b, a plurality of guide rods 43c (in Fig. 2, only one is shown), and the like. The front support 43a and the rear support 43b are disposed with a distance therebetween and connected by the plurality of guide rods 43c. The cylinder 41 (refer to Fig. 1) is mounted on the front support 43a.

The movable plate 45 is disposed between the front support 43a and the rear support 43b and is made so as to be able to advance and retreat along the guide rods 43c. The rotation of the movable plate 45 is prevented by the plurality of (for example, two) guide rods 43c. The plurality of guide rods 43c are disposed symmetrically with the center line of the screw 42 as the center thereof. The screw 42 advances and retreats according to the advance and retreat of the movable plate 45.

In addition, as a member for guiding the movable plate 45, the guide rod 43c is used. However, a guide rail which is laid on the slide base Sb may be used, and the guide rod 43c may not be provided.

The plasticizing motor 51 and the injection motor 61 are mounted on the movable plate 45. The injection motor 61 may be disposed on the outside in a radial direction of the plasticizing motor 51. At least a portion of the injection motor 61 may be disposed at a position overlapping the plasticizing motor 51 in an axial direction (a right-left direction in Fig. 2). The overall length of the injection unit 40 can be shortened.

The injection motor 61 has a stator 62, a rotor 63, a motor frame 64, and the like. In addition, the injection motor 61 may be a frameless motor.

The stator 62 has, for example, a stator core 62a and a stator coil 62b. The stator core 62a may be a laminate of electromagnetic steel sheets. The stator coil 62b is disposed in a slot of the stator core 62a. In addition, instead of the stator coil 62b, a permanent magnet may be used.

The rotor 63 has, for example, a rotor core and a permanent magnet as a magnet section. The permanent magnet is mounted on the outer periphery of the rotor core. In addition, as the magnet section, instead of the permanent magnet, an electromagnet may be used, and the electromagnet may be formed as a portion of the rotor core.

The motor frame 64 surrounds the stator 62 or the rotor 63. The motor frame 64 retains the bearing 66. The bearing 66 rotatably supports a ball screw nut 65b of the motion conversion mechanism 65. A plurality of bearings 66 may be disposed at intervals in the axial direction of the ball screw nut 65b.

The center line of the injection motor 61 and the center line of the motion conversion mechanism 65 are disposed on the same straight line. The injection motor 61 and the motion conversion mechanism 65 may be in plurality and may be disposed symmetrically with respect to the center of the screw 42.

The motion conversion mechanism 65 includes a ball screw shaft 65a and the ball screw nut 65b. The ball screw shaft 65a is a male screwmember having a thread groove at the outer periphery thereof. On the other hand, the ball screw nut 65b is a female screwmember having a thread groove at the inner periphery thereof. Balls (not shown) are interposed between the ball screw shaft 65a and the ball screw nut 65b.

The ball screw shaft 65a spans across the front support 43a and the rear support 43b. On the other hand, the ball screw nut 65b is fixed to the rotor 63, thereby rotating along with the rotor 63.

If the injection motor 61 is driven, the ball screw nut 65b advances and retreats while rotating, and thus the movable plate 45 advances and retreats, and thus the screw 42 advances and retreats. That is, the rotation motion of the injection motor 61 is converted into the rotation and linear motion of the ball screw nut 65b, thereby being converted into the linear motion of the movable plate 45.

In addition, in this embodiment, the ball screw shaft 65a is fixed and the ball screw nut 65b rotates and moves linearly. However, the motion of the ball screw shaft 65a and the ball screw nut 65b may be various. For example, a configuration may be made in which the ball screw nut 65b rotates and the ball screw shaft 65a moves linearly. Further, instead of a ball screw, a roller screw may be used.

Incidentally, as shown in Fig. 2, at least a portion of the ball screw nut 65b is disposed at a position overlapping the injection motor 61 in the axial direction (the right-left direction in Fig. 2). Accordingly, the overall length of the injection unit 40 can be shortened.

In addition, the injection unit 40 of this embodiment is an inline screw type. However, the injection unit 40 may be a pre-plasticizing type. In an injection unit of a pre-plasticizing type, a molding material melted in a plasticizing cylinder is fed into an injection cylinder and the molding material is then injected from the injection cylinder into a mold unit. A screw as a delivery member is disposed in the plasticizing cylinder so as to be able to rotate or so as to be able to rotate and be able to advance and retreat, and aplungeras adeliverymember is disposed in the injection cylinder so as to be able to advance and retreat. The injection unit of a pre-plasticizing type has a motor which rotates the screw, a motor which advances and retreats the plunger, and the like.

The embodiment and the like of the injection molding machine have been described above. However, the present invention is not limited to the above-described embodiment and the like, and various modifications and improvements can be made within the scope of the concept of the present invention stated in the appended claims.

For example, the present invention can also be applied to a motor which is used along with a motion conversion mechanism for converting rotation motion thereof into linear motion, such as a motor of the injection unit of a pre-plasticizing type.

The mold clamping unit 10 of the above-described embodiment has the mold clamping motor 21 as a drive source. However, the mold clamping unit 10 may have a hydraulic cylinder, instead of the mold clamping motor 21. Further, the mold clamping unit 10 may have a linear motor for mold opening and closing and may have an electromagnet for molding clamping.

## Claims

1. An injection molding machine comprising:
a movable member (45);
a motor (61) which moves the movable member (45);
a motion conversion mechanism (65) which converts rotation motion of the motor (61) into linear motion of the movable member (45),
a plasticizing cylinder (41) which heats a molding material which is filled into a mold unit (30); and
a delivery member (42) which sends out the molding material in the plasticizing cylinder (41),
wherein the motor (61) is mounted on the movable member (45) and moves along with the movable member (45),
the motion conversion mechanism (65) includes a female screw member (65b) and a male screw member (65a) corresponding to the female screw member (65b), and
at least a part of the female screw member (65b) is disposed at a position overlapping the motor (61) in an axial direction, wherein
the center line of the injection motor (61) and the center line of the motion conversion mechanism (65) are disposed on the same straight line, and
the delivery member (42) moves along with the movable member (45).

2. The injection molding machine according to Claim 1, wherein
the rotation motion of the motor (61) is converted into rotation and linear motion of the female screw member (65b) and converted into linear motion of the movable member (45).

3. The injection molding machine according to any one of Claims
1 or 2, wherein the female screw member is a ball screw nut (65b), and the male screw member is a ball screw shaft (65a).

## Patentansprüche

1. Spritzgießmaschine, die Folgendes umfasst:
ein bewegliches Element (45);
einen Motor (61), der das bewegliche Element (45) bewegt;
einen Bewegungsumwandlungsmechanismus (65), der eine Drehbewegung des Motors (61) in eine geradlinige Bewegung des beweglichen Elements (45) umwandelt,
einen Plastifizierungszylinder (41), der eine Formmasse, die in eine Formeinheit (30) gefüllt wird, erhitzt; und
ein Zufuhrelement (42), das die Formmasse in dem Plastifizierungszylinder (41) anschickt,
wobei der Motor (61) an dem beweglichen Element (45) angebracht ist und sich zusammen mit dem beweglichen Element (45) bewegt,
wobei der Bewegungsumwandlungsmechanismus (65) ein Innengewindeelement (65b) und ein Außengewindeelement (65a), das mit dem Innengewindeelement (65b) übereinstimmt, umfasst, und
wobei wenigstens ein Teil des Innengewindeelements (65b) an einer Position angeordnet ist, die sich mit dem Motor (61) in einer axialen Richtung überschneidet,
wobei die Mittellinie des Einspritzmotors (61) und die Mittellinie des Bewegungsumwandlungsmechanismus (65) auf derselben Geraden angeordnet sind, und
wobei sich das Zufuhrelement (42) zusammen mit dem beweglichen Element (45) bewegt.

2. Spritzgießmaschine nach Anspruch 1, wobei die Drehbewegung des Motors (61) in eine Drehung und eine geradlinige Bewegung des Innengewindeelements (65b) umgesetzt wird und in eine geradlinige Bewegung des beweglichen Elements (45) umgesetzt wird.

3. Spritzgießmaschine nach einem der Ansprüche 1 oder 2, wobei das Innengewindeelement eine Kugelumlaufmutter (65b) ist und wobei das Außengewindeelement eine Kugelumlaufspindel (65a) ist.

## Revendications

1. Machine de moulage à injection, comprenant:
un élément mobile (45);
un moteur (61) qui déplace l'élément mobile (45);
un mécanisme de conversion de mouvement (65) qui convertit le mouvement de rotation du moteur (61) en un mouvement linéaire de l'élément mobile (45),
un cylindre de plastification (41) qui chauffe un matériau de moulage qui est versé dans une unité de moule (30); et
un élément de distribution (42) qui envoie le matériau de moulage dans le cylindre de plastification (41),
dans laquelle le moteur (61) est monté sur l'élément mobile (45) et se déplace de concert avec l'élément mobile (45),
la machine de conversion de mouvement (65) comprend un élément de vis femelle (65b) et un élément de vis mâle (65a) qui correspond à l'élément de vis femelle (65b), et
au moins une partie de l'élément de vis femelle (65b) est disposée à une position qui chevauche le moteur (61) dans une direction axiale,
dans laquelle l'axe médian du moteur à injection (61) et l'axe médian du mécanisme de conversion de mouvement (65) sont disposés sur la même ligne droite,
et
l'élément de distribution (42) se déplace de concert avec l'élément mobile (45).

2. Machine de moulage à injection selon la revendication 1, dans laquelle le mouvement de rotation du moteur (61) est converti en un mouvement rotatif et linéaire de l'élément de vis femelle (65b) et est converti en un mouvement linéaire de l'élément mobile (45).

3. Machine de moulage à injection selon l'une quelconque des revendications 1 ou 2, dans laquelle l'élément de vis femelle est un écrou de vis à bille (65b), et l'élément de vis mâle est une tige de vis à bille (65a).
